# EUROPEAN PATENT SPECIFICATION

(11) **EP 2 579 691 B1**
(45) Date of publication and mention of the grant of the patent: **10.02.2016**
(21) Application number: 12187221.2
(22) Date of filing: 04.10.2012
(51) Int. Cl.: H05B 37/02

(54) **INTELLIGENT SWITCH MODULE AND OPERATING METHOD FOR THE SAME**
INTELLIGENTER SCHALTER FÜR ENERGIEVERWALTUNG UND ENTSPRECHENDES VERFAHREN
COMMUTATEUR INTELLIGENT PERMETTANT LA GESTION DE L'ALIMENTATION ÉLECTRIQUE ET PROCÉDÉ CORRESPONDANT

(30) Priority: 04.10.2011 TW 100135849
(43) Date of publication of application: 10.04.2013
(73) Proprietor: Unitech Electronics Co., Ltd, New Taipei City 231 (TW)
(72) Inventor: Sher, Shang-Fang, New Taipei City 231 (TW); Liao, Chun-Kai, New Taipei City 231 (TW)
(74) Representative: 2K Patentanwälte Blasberg Kewitz & Reichel

(56) References cited:
- EP-A1- 1 450 383
- WO-A2-2010/116283
- US-A1- 2009 302 782
- US-A1- 2010 077 404

## Description

### BACKGROUND OF THE INVENTION

### Field of the Invention

The present invention relates to a switch module, and especially relates to an intelligent switch module which is able to record the power statuses of all of the switch modules in a group.

### Description of Prior Art

Generally speaking, switches are essential for a building. Electronic devices (for example, electric lamps or household appliances) in buildings can be switched (turned on / off) easily using switches. Therefore, switches are essential for daily livings.

To take the electric lamp for example, an electric lamp is usually controlled by one switch in the building to be turned on or off. However, in a specific circumstance (for example, in a house), there are ten switches if there are ten electric lamps. The user needs to operate the ten switches respectively and personally to switch the ten electric lamps into the required status (for example, five of the ten electric lamps are turned on and the remaining five electric lamps are turned off). It is very inconvenient for the users (especially for the elders or people for whom walking is inconvenient) if the distances between the ten switches are too far or the quantity of the switches is much larger than ten.

Therefore, a controller which is connected to a plurality of switches to control the switches is commercially available. The controller is usually used in hotels, and the user can operate the controller to control these switches easily at the same time. Switches in a house can be controlled easily as well if the controller mentioned above is arranged in the house.

However, the controller mentioned above is usually fixed at one place in the house. It is still inconvenient because the user needs to walk to the place where the controller is fixed if the user wants to control the switches. Moreover, the manufacturing cost of the controller is high. High costs are caused if a lot of the controllers are to be arranged in the house. Besides, the cost of the layouts of the connections between the controllers and the switches is required, and the construction for the layouts of the connections is troublesome.

Therefore, it is important to provide an enhanced switch module that is able to control other switch modules through one switch module, and the layouts of the connections between the controllers and the switches will be eliminated.

WO 2010/116283 A2 discloses an intelligent lighting control system, wherein control modules are interconnected in a conventional four-wire local area network for executing different power control functions in response to remote wireless commands as well as preset manual switch commands at the wall box level. The one or more control modules include an infrared signal sensor, a laser signal sensor, a signal decoder, a data microcontroller, a parameter lookup table and multiple light emitting diodes (LEDs) used individually or in combination to indicate the programming mode, or provide sensor feedback, or indicate device status, according to information contained in a command signal transmitted by a remote programming unit. A learning mode in the sense of the present application is not disclosed.

US 2010/0077404 A1 discloses a system for controlling a plurality of sensory devices including a plurality of end devices having the plurality of sensory devices connected thereto, respectively; a multi-device controller for managing IR control codes as profiles, and issuing a device control command to control the sensory device on the basis of the sensory effect metadata, and a ZigBee coordinator.

### SUMMARY OF THE INVENTION

It is an object of the present invention to provide an enhanced intelligent switch module and operating method for the same.

According to the present invention, this problem is solved by an intelligent switch module according to claim 1 and by an operating method according to claim 10. Further advantageous embodiments are the subject-matter of the dependent claims

According to the present invention anyone of the switch modules in a group can be chosen as a main switch module to enter a learning mode to record power statuses of all of the switch modules in the group. All of the switch modules in the group are switched back to the statuses which are recorded in the learning mode when the main switch module is operated to turn on a backup mode. Moreover, every switch module is able to record at least one set of record of the power statuses of the switch modules in the group.

In order to achieve the object of the present invention mentioned above, the intelligent switch module includes a switch unit, a micro control unit, a power detecting and controlling unit, and a signal transceiver unit. A group includes a plurality of switch modules. Anyone of the switch modules in the group can be chosen by a user as a main switch module at any time. The main switch module can be driven to enter a learning mode. In the meantime, the power status is detected by the switch module in the group, and then a power status information is transmitted from the switch modules to the main switch module to be recorded. A switch command is sent from the main switch module to the switch modules in the group in accordance with the power status information recorded in the main switch unit when the main switch module is operated to turn on a backup mode. Therefore, all of the switch modules in the group are switched back to the statuses which are recorded in the learning mode.

The efficiency of the present invention is that the group includes a plurality of switch modules, and anyone of the switch modules in the group can be chosen as the main switch module. The power status information of all of the switch modules in the group can be recorded in the main switch unit. The switch command is sent from the main switch unit to all of the switch modules in the group to switch the power statuses of the switch modules in the group. Moreover, every switch module in the group can be operated by the main switch module. In other words: every switch module in the group is able to control other switch modules actively, and is able to be controlled by other switch modules passively. Therefore, the intelligent switch module of the present invention is flexible for usage and can increase the practicality of the switch module.

### BRIEF DESCRIPTION OF DRAWING

Fig. 1 shows a block diagram of a preferred embodiment of the present invention.
Fig. 2 shows a block diagram of an application for a preferred embodiment of the present invention.
Fig. 3 shows a diagram of the switch modules of the present invention and the electric lamps arranged in a room.
Fig. 4A shows a flow chart of a preferred embodiment of the present invention.
Fig. 4B shows a flow chart of another preferred embodiment of the present invention.
Fig. 5 shows a block diagram of another preferred embodiment of the present invention.

### DETAILED DESCRIPTION OF THE INVENTION

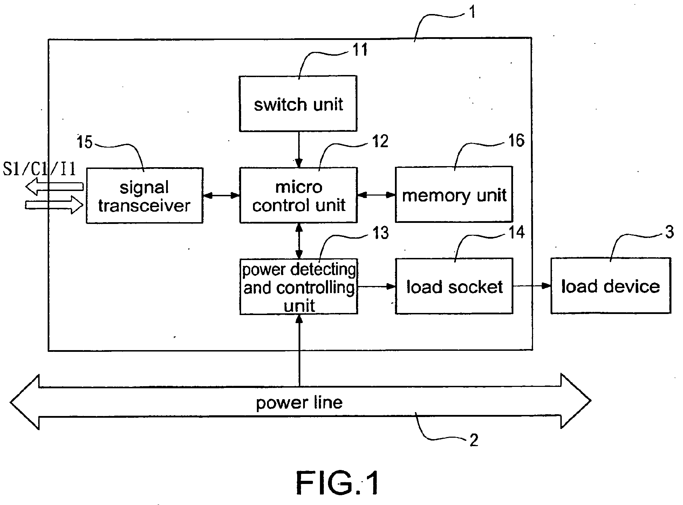

Fig. 1 shows a block diagram of a preferred embodiment of the present invention. The present invention is to provide an intelligent switch module 1. The intelligent switch module 1 will be referred to as switch module 1 in the contents afterwards for brevity. The switch module 1 is electrically connected to a power line 2 (for example, a power line of the wall socket power) and a load device 3 (for example, an electric lamp). The electric power is supplied to the load device 3 through the switch module 1 and the power line 2, so that the load device 3 can be operated (for example, turned on or turned off).

The switch module 1 mainly includes a switch unit 11, a micro control unit 12, a power detecting and controlling unit 13, a load socket 14, a signal transceiver 15, and a memory unit 16. The micro control unit 12 is electrically connected to the switch unit 11, the power detecting and controlling unit 13, the signal transceiver 15, and the memory unit 16. The load socket 14 is electrically connected to the power detecting and controlling unit 13. In this embodiment, the switch module 1 is connected to the load device 3 through the load socket 14. The load socket 14 is, for example, an electric lamp socket. The load device 3 is, for example, an electric lamp. Moreover, the load socket 14 is, for example, a power socket. The load device 3 is, for example, an electronic device connected to the switch module 1 through the power socket. The scope of the present invention is not limited to the examples mentioned above.

The micro control unit 12 is used to control the switch unit 11, the power detecting and controlling unit 13, the signal transceiver 15, and the memory unit 16, and is used to handle the signals and the data transmitted from the switch unit 11, the power detecting and controlling unit 13, the signal transceiver 15, and the memory unit 16.

The power detecting and controlling unit 13 is electrically connected to the power line 2. The power status of the switch module 1 is switched and detected by the power detecting and controlling unit 13. Moreover, the power statuses include cutting off (switched-off or non-conducting) and conducting. If the switch module 1 has the fine adjustment function, the power statuses further include the amperage of the electricity passing through the switch module 1 when the switch module 1 is conducting. The electricity supplied from the power line 2 is received by the load device 3 when the power status of the switch module 1 is conducting. Therefore, the load device 3 is activated (for example, the electric lamp is lighting, and the brightness of the electric lamp is controlled by the amperage of the electricity passing through). The electricity supplied from the power line 2 is not received by the load device 3 when the power status of the switch module 1 is cut off. Therefore, the load device 3 is not activated (for example, the electric lamp is not lighting).

In this embodiment, the switch unit 11 is, for example, a touch switch. According to the requirement, the switch unit 11 is, for example, a push-button switch, a toggle switch, a slide switch, or a mechanical switch as well. The switch unit 11 of the switch module 1 is controlled by a user to control the power detecting and controlling unit 13 and to switch the power status of the switch module 1. In other words: the switch unit 11 is controlled directly by the user to switch the power status of the switch module 1 as cutting off (switched-off or non-conducting), conducting, or fine adjusting (changing) the amperage of the electricity passing through the switch module 1 to control the operation of the load device 3.

In this embodiment, a power status information I1 can be sent from the switch module 1 through the signal transceiver unit 15 to other switch modules 1. The power status information I1 of other switch modules 1 can be received by the switch modules 1 through the signal transceiver unit 15 as well. The power status information I1 is recorded in the memory unit 16 after the power status information I1 is handled by the micro control unit 12. Moreover, whether the power status of the switch power 1 is conducting or cutting off (switched-off or non-conducting) is recorded in the power status information I1. The amperage of the electricity passing through the switch module 1 is recorded in the power status information I1 as well if the power status is conducting.

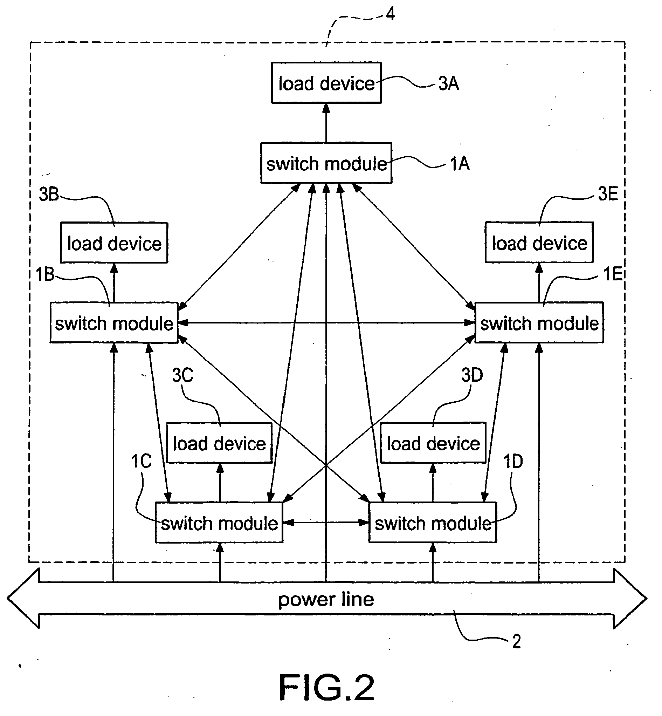

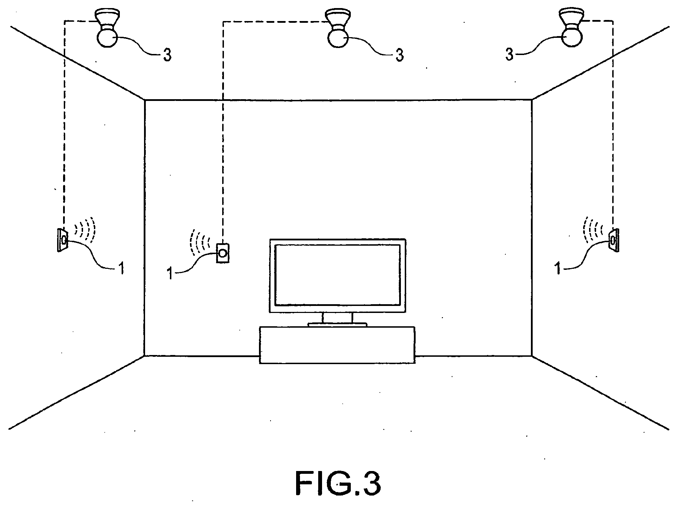

Fig. 2 shows a block diagram of an application for a preferred embodiment of the present invention. Fig. 3 shows a diagram of the switch modules of the present invention and the electric lamps arranged in a room. The single switch module 1 of the present invention is used to control and be electrically connected to the single load device 3. Moreover, in a specific circumstance (for example, in a house as shown in Fig. 3), a group includes a plurality of the switch modules 1. As shown in Fig. 2, a group 4 includes a plurality of the switch modules 1A, 1B, 1C, 1D, and 1E. Each of the load devices 3A, 3B, 3C, 3D, and 3E is controlled and electrically connected to the switch modules 1A, 1B, 1C, 1D, and 1E respectively.

The switch modules 1A, 1B, 1C, 1D, and 1E in the group 4 are electrically connected to each other with the Digital Addressable Lighting Interface (DALI) protocol for addressing. Therefore, the switch modules 1A, 1B, 1C, 1D, and 1E in the group 4 know the addresses of the switch modules 1A, 1B, 1C, 1D, and 1E in the group 4, so that commands and information can be transmitted (through the signal transceiver unit 15) between the switch modules 1A, 1B, 1C, 1D, and 1E in the group 4.

In this embodiment, the signal transceiver 15 is, for example, a Zigbee transceiver. Commands and information can be transmitted wirelessly from the switch module 1 through the signal transceiver 15 with Zigbee protocol and complying with DALI protocol. Moreover, the signal transceiver 15 can be other kinds of wireless transmission interface, such as Bluetooth or Wi-Fi. Commands and information can be transmitted from the switch module 1 through the power line 2 with DALI or Power Line Communication (PLC) interface. The scope of the present invention is not limited to the examples mentioned above.

Anyone of the switch modules 1 can be chosen by the user as a main switch module if the group 4 includes a plurality of the switch modules 1. The power statuses of the switch modules 1A, 1B, 1C, 1D, and 1E in the group 4 are detected by the switch modules 1A, 1B, 1C, 1D, and 1E respectively, and then the power status information I1 is generated and transmitted to the main switch module to record in the memory unit 16 when the main switch module is driven to enter a learning mode. Moreover, the power status information I1 recorded in the memory unit 16 includes the power status information I1 of the main switch module.

The switch modules 1A, 1B, 1C, 1D, and 1E can be controlled by the user respectively to control the action (turn on or off) of the load devices 3A, 3B, 3C, 3D, and 3E respectively. Moreover, the switch modules 1A, 1B, 1C, 1D, and 1E can be controlled by the user respectively to control the amperage of the electricity passing through to control the operation (for example, the brightness of the electric lamp) of the load devices 3A, 3B, 3C, 3D, and 3E respectively if the switch modules 1A, 1B, 1C, 1D, and 1E have fine adjustment function.

A switch commands S1 (as shown in Fig. 1) is sent from the main switch module to the switch modules 1A, 1B, 1C, 1D, and 1E in the group 4 in accordance with the power status information I1 recorded in the memory unit 16 when the main switch module is operated to turn on a backup mode. Therefore, the switch modules 1A, 1B, 1C, 1D, and 1E are switched back to the statuses which are recorded in the learning mode (including on status or off status, and if it is on status, further including the amperage of the electricity passing through). More specifically, the switch command S1 sent from the main switch module to the switch module 1A is in accordance with the power status information I1 sent from the switch module 1A in the learning mode. The switch command S1 sent from the main switch module to the switch module 1B is in accordance with the power status information I1 sent from the switch module 1B in the learning mode, and so on.

For example, the power statuses of the switch modules 1A, 1B are conducting (i.e. the load devices 3A, 3B are activated), and the power statuses of the switch modules 1C, 1D, 1E are cutting off (i.e. the load devices 3C, 3D, 3E are not activated) when the main switch module enters the learning mode. The power status information I1 is recorded in the memory unit 16 by the main switch module. After that, when the main switch module is operated to turn on the backup mode, the power statuses of the switch modules 1A, 1B will be conducting and the power statuses of the switch modules 1C, 1D, 1E will be cutting off, even if the power statuses of the switch modules 1A, 1B, 1C, 1D, 1E were cutting off (i.e. the load devices 3A, 3B, 3C, 3D, 3E were not activated) before the main switch module is operated to turn on the backup mode. In another word, the power statuses of the switch modules 1A, 1B, 1C, 1D, 1E in the group 4 are controlled simultaneously by the user with the main switch module. It is very convenient for the user.

For example, the power statuses of all of the switch modules 1 are cutting off and are recorded in the switch module 1 in the bedroom. The power statuses of all of the switch modules 1 will be cut off when the switch module 1 in the bedroom is operated to turn on the backup mode. In another word, all of the switch modules 1 are cut off easily and the user doesn't need to leave the bedroom to control all of the switch modules 1.

More particularly, anyone of the switch modules 1A, 1B, 1C, 1D, 1E in the group 4 can be chosen by the user as a main switch module (i.e. every switch module can be the main switch module, and there may be many main switch modules). The power status information I1 of the switch modules 1A, 1B, 1C, 1D, 1E recorded in the switch modules 1A may be different from that recorded in the switch modules 1B, and so on. Therefore, it is convenient and easy for the user to switch the switch modules 1A, 1B, 1C, 1D, 1E respectively in accordance with the power status information I1 recorded in different main switch modules.

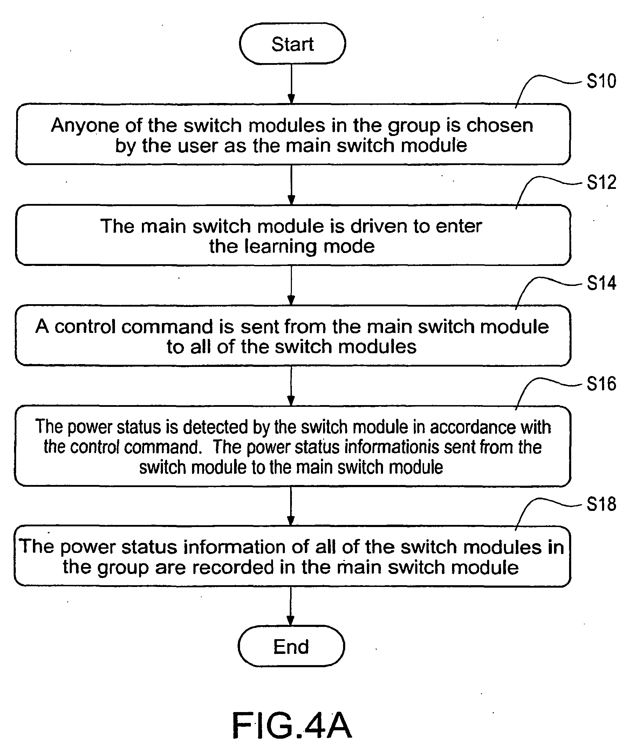

Fig. 4A shows a flow chart of a preferred embodiment of the present invention. Firstly, anyone of the switch modules 1 in the group 4 is chosen by the user as the main switch module (S10). Then, the main switch module is driven to enter the learning mode (S12). More specifically, in the step S12, the user operates the switch unit 11 (for example, the user presses the switch unit 11 three times successively), so that the main switch module is driven to enter the learning mode. The method mentioned above is just an example, and the scope of the present invention is not limited to it.

The power status information I1 sent from all of the switch modules 1 will be received and recorded by the main switch module when the main switch module is driven to enter the learning mode. More specifically, a control command C1 (as shown in Fig. 1) is sent from the main switch module to all of the switch modules 1 (S14) when the main switch module is driven to enter the learning mode. Then, the power status (conducting or cutting off, if it is conducting, further including the amperage of the electricity passing through the switch module 1) is detected by the switch module 1 in accordance with the control command C1. The power status information I1 is sent from the switch module 1 to the main switch module (S16). Finally, the power status information I1 of all of the switch modules 1 in the group 4 are recorded in the main switch module (S18).

After step 18, the power status information I1 of all of the switch modules 1 in the group 4 are recorded in the main switch module. The generating timing of the power status information I1 is the timing when the main switch module is driven to enter the learning mode.

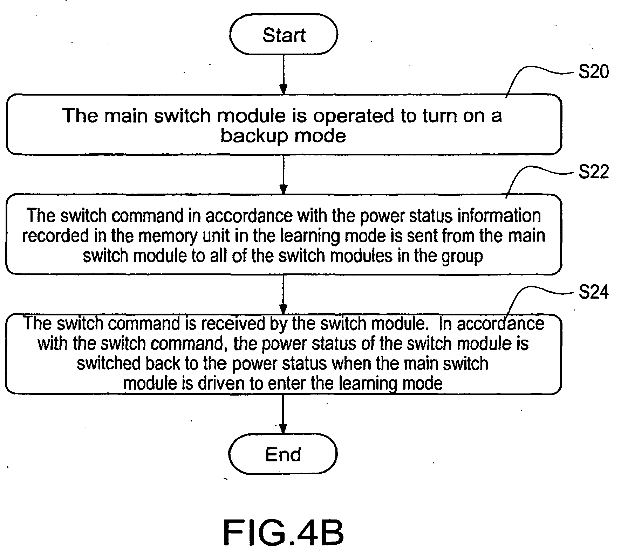

Fig. 4B shows a flow chart of another preferred embodiment of the present invention. Firstly, the main switch module is operated to turn on a backup mode by the user (S20). More specifically, the user operates the switch unit 11 (for example, the user presses the switch unit 11 five times successively), so that the main switch module is operated to turn on the backup mode. The method mentioned above is just an example, and the scope of the present invention is not limited to it.

After step 20, the switch command S1 in accordance with the power status information I1 recorded in the memory unit 16 in the learning mode is sent from the main switch module to all of the switch modules 1 in the group 4 (S22). The switch command S1 is received by the switch module 1 through the signal transceiver unit 15. In accordance with the switch command S1, the power status of the switch module 1 is switched back to the power status when the main switch module is driven to enter the learning mode (S24).

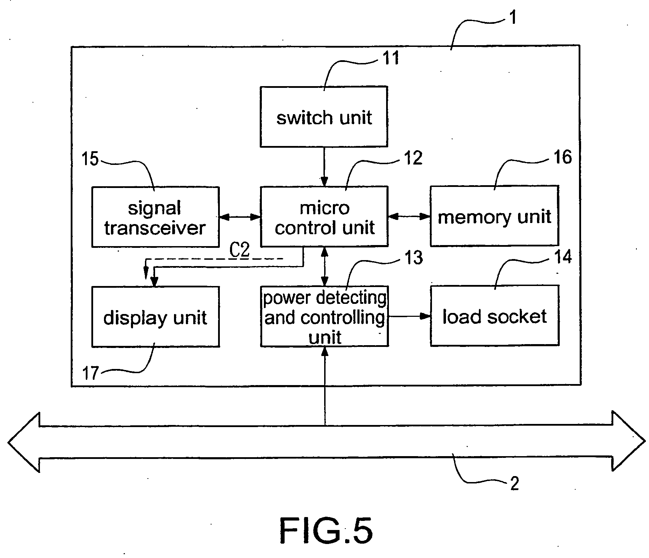

Fig. 5 shows a block diagram of another preferred embodiment of the present invention. In this embodiment, the switch module 1 further includes a display unit 17 electrically connected to the micro control unit 12. The display unit 17 is used to display the information of the switch module 1. For example, the user will know the power status and the electricity passing through the switch module 1 if the load device 3 (for example, an electric lamp) is electrically connected to the switch module 1. The display unit 17 displays the power status (conducting or cutting off, if conducting, further displaying the amperage of the electricity passing through) of the switch module 1 with lights or texts if the load device 3 is not electrically connected to the switch module 1. Moreover, the current consumption of the switch module 1 is detected by the power detecting and controlling unit 13 to generate an amperage information C2. The display unit 17 will display the amperage information C2. The use of electricity will be calculated by the switch module 1 in accordance with the amperage information C2, and will be displayed on the display unit 17. Therefore, the user will easily know the electricity consumption of the load device 3.

## Claims

1. An intelligent switch module (1), configured to be electrically connected to a power line (2) and a load device (3) and to convey an electric power from the power line (2) to the load device (3), said intelligent switch module (1) comprising:
a power detecting and controlling unit (13) to be electrically connected to the power line (2), said power detecting and controlling unit (13) being configured
to detect whether a power status is conducting or cutting off and to switch the power status and
to detect a amperage of the electricity passing through the switch module (1) and to change the amperage of the electricity passing through the switch module (1);
a micro control unit (12) electrically connected to the power detecting and controlling unit (13);
a switch unit (11) electrically connected to the micro control unit (12), the switch unit (11) being operated externally to control the power detecting and controlling unit (13) to switch the power status; and
a signal transceiver (15) electrically connected to the micro control unit (12), the signal transceiver (15) being configured to transmit a power status information (I1) of the switch module (1) externally and to receive the power status information (I1) sent from other switch modules (1),
wherein the
power status information (I1) sent from all of the other switch modules (1) in an area is received by the switch modules (1) when the switch modules (1) are driven externally to enter a learning mode;
the power statuses of all of the switch modules (1) in the area are controlled by the switch module (1) in accordance with the power status information (I1) recorded in the switch unit (1) when the switch module (1) is operated externally to turn on a backup mode; and
the power statuses of all of the switch modules (1) in the area are switched back to the statuses which are recorded in the learning mode.

2. The intelligent switch module (1) as claimed in claim 1, further being configured to record the power status as being conducting or cutting off in the power status information (I1), wherein the amperage of the electricity passing through the switch module (1) is further recorded in the power status information (I1) if the power status is conducting.

3. The intelligent switch module (1) as claimed in claim 1 or 2, wherein the switch unit (11) is a touch switch, a push-button switch, a toggle switch or a slide switch.

4. The intelligent switch module (1) as claimed in any of the preceding claims, wherein the switch module (1) is electrically connected to other switch modules (1) with the digital addressable lighting interface protocol for addressing.

5. The intelligent switch module (1) as claimed in claim 4, wherein
the signal transceiver unit (15) is a Zigbee transceiver; and
a control command (C1), a switch command (S1) and the power status information (I1) are transmitted wirelessly from the switch module (1) through the signal transceiver unit (15) with Zigbee protocol and complying with digital addressable lighting interface protocol.

6. The intelligent switch module (1) as claimed in any of the preceding claims, further comprising a load socket (14) electrically connected to the power detecting and controlling unit (13), said intelligent switch module (1) further being configured to be connected to the load device (3) via the load socket (14).

7. The intelligent switch module (1) as claimed in claim 6, wherein the load socket (14) is a power socket or an electric lamp socket.

8. The intelligent switch module (1) as claimed in any of the preceding claims, further comprising a memory unit (16) electrically connected to the micro control unit (12), wherein the memory unit (16) is configured to record the power statuses of all of the switch modules (1) in the area when the switch module (1) is driven to enter the learning mode.

9. The intelligent switch module (1) as claimed in any of the preceding claims, further comprising a display unit (17) electrically connected to the micro control unit (12), wherein
the current consumption of the switch module (1) is detected by the power detecting and controlling unit (13) to generate an amperage information (C2); and
the display unit (17) displays the amperage information (C2) or the use of electricity calculated by the switch module (1) in accordance with the amperage information (C2).

10. An operating method for operating intelligent switch modules (1), the operating method being applied to a group including a plurality of the switch modules (1), the operating method including:
a) choosing one of the switch modules (1) as a main switch module of the group;
b) receiving and recording a power status information (I1) of all of the switch modules (1) in the group when the main switch module is driven to enter a learning mode, said power status information (I1) including the amperage of the electricity passing through the switch modules (1) in the group when conducting; and
c) sending a switch command (S1) from the main switch module to the other switch modules (1) in the group in accordance with the power status information (I1) recorded in the main switch module to thereby change the amperage of the electricity passing through the switch modules in the group, when the main switch module is operated to turn on a backup mode, wherein all of the switch modules (1) in the group are switched back to the statuses recorded in the learning mode.

11. The operating method as claimed in claim 10, wherein in the step b) a control command (C1) is sent from the main switch module to all of the switch modules (1) in the group, so that the power status is detected by the switch module (1) and the power status information (I1) is sent from the switch module (1) to the main switch module.

12. The operating method as claimed in claim 10 or 11, wherein the switch modules (1) are electrically connected to each other with the digital addressable lighting interface protocol for addressing.

13. The operating method as claimed in claim 12, wherein the control command (C1), the switch command (S1) and the power status information (I1) are transmitted wirelessly from the switch modules (1) with Zigbee protocol.

14. The operating method as claimed in any of claims 10 to 13, further comprising:
d) detecting the current consumption of the switch module (1) to generate an amperage information (C2); and
e) displaying the amperage information (C2) or the use of electricity calculated by the switch module (1) in accordance with the amperage information (C2) on a display unit (17) in the switch module (1).

15. The operating method as claimed in any of claims 10 to 14, wherein in the step b) and in the step c) a switch unit (11) in the main switch module is operated, so that the main switch module is driven to enter the learning mode and is operated to turn on the backup mode.

## Patentansprüche

1. Intelligentes Schaltmodul (1), das ausgelegt ist, um elektrisch mit einer Stromleitung (2) und einer Lasteinrichtung (3) verbunden zu sein und einen elektrischen Strom von der Stromleitung (2) zu der Lasteinrichtung (3) zu leiten, welches intelligente Schaltmodul (1) umfasst:
eine Stromerfassungs- und Steuereinheit (13) zur elektrischen Verbindung mit der Stromleitung (2), wobei die Stromerfassungs- und Steuereinheit (13) ausgelegt ist, um
zu erkennen, ob ein Leitungszustand leitend oder nicht-leitend bzw. unterbrochen ist und den Leitungszustand zu schalten bzw. zu ändern, und
eine Stromstärke des Stroms, der durch das Schaltmodul (1) fließt, zu erfassen und die Stromstärke des Stroms, der durch das Schaltmodul (1) fließt, zu ändern;
eine Mikrosteuereinheit (12), die elektrisch mit der Stromerfassungs- und Steuereinheit (13) verbunden ist;
eine Schalteinheit (11), die elektrisch mit der Mikrosteuereinheit (12) verbunden ist, wobei die Schalteinheit (11) von extern betrieben wird, um die Stromerfassungs- und Steuereinheit (13) zu steuern, um den Leitungszustand zu schalten bzw. zu ändern; und
eine Signal-Sende-Empfangseinrichtung (15), die elektrisch mit der Mikrosteuereinheit (12) verbunden ist, wobei die Signal-Sende-Empfangseinrichtung (15) ausgelegt ist, um eine Leitungszustandsinformation (I1) des Schaltmoduls (1) nach extern zu übertragen und die Leitungszustandsinformation (I1) zu empfangen, die von anderen Schaltmodulen (1) gesendet wird,
wobei die
Leitungszustandsinformation (I1), die von sämtlichen der anderen Schaltmodule (1) in einem Bereich gesendet wird, von den Schaltmodulen (1) empfangen wird, wenn die Schaltmodule (1) von extern betrieben werden, um an einem Lernmodus teilzunehmen;
die Leitungszustände von sämtlichen der Schaltmodule (1) in dem Bereich von dem Schaltmodul (1) entsprechend der Leitungszustandsinformation (I1) gesteuert werden, die in der Schalteinheit (1) gespeichert ist, wenn das Schaltmodul (1) von extern betrieben wird, um einen Sicherungsmodus zu aktivieren; und
die Leitungszustände von sämtlichen der Schaltmodule (1) in dem Bereich zurück auf die Zustände geschaltet werden, die in dem Lernmodus aufgezeichnet werden.

2. Intelligentes Schaltmodul (1) nach Anspruch 1, das weiterhin ausgelegt ist, um den Leitungszustand als leitend oder nicht-leitend bzw. unterbrochen in der Leitungszustandsinformation (I1) aufzuzeichnen, wobei die Stromstärke des Stroms, der durch das Schaltmodul (1) fließt, weiterhin in der Leitungszustandsinformationen (I1) aufgezeichnet wird, wenn der Leitungszustand leitend ist.

3. Intelligentes Schaltmodul (1) nach Anspruch 1 oder 2, wobei die Schalteinheit (11) ein Berührungsschalter, einen Druckknopfschalter, ein Kippschalter oder ein Schiebeschalter ist.

4. Intelligentes Schaltmodul (1) nach einem der vorhergehenden Ansprüche, wobei das Schaltmodul (1) elektrisch leitend mit anderen Schaltmodulen (1) mit dem Digital Addressable Lighting Interface Protokoll zum Adressieren verbunden ist.

5. Intelligentes Schaltmodul (1) nach Anspruch 4, wobei
die Signal-Sende-Empfangseinrichtung (15) eine ZigBee-Sende-Empfangseinrichtung ist; und
ein Steuerbefehl (C1), ein Schaltbefehl (S1) und die Leitungszustandsinformation (I1) von dem Switch-Modul (1) mittels der Signal-Sende-Empfangseinrichtung (15) mit einem Zigbee-Protokoll und in Übereinstimmung mit dem Digital Addressable Lighting Interface Protokoll drahtlos übertragen werden.

6. Intelligentes Schaltmodul (1) nach einem der vorhergehenden Ansprüche, weiterhin umfassend eine Last-Anschlussdose (14), die elektrisch mit der Stromerfassungs- und Steuereinheit (13) verbunden ist, wobei das intelligente Schaltmodul (1) weiterhin ausgelegt ist, um mit der Lasteinrichtung (3) über die Last-Anschlussdose (14) verbunden zu werden.

7. Intelligentes Schaltmodul (1) nach Anspruch 6, wobei die Last-Anschlussdose (14) eine Steckdose oder eine elektrische Lampenfassung ist.

8. Intelligentes Schaltmodul (1) nach einem der vorhergehenden Ansprüche, weiterhin umfassend eine Speichereinheit (16), die elektrisch mit der Mikrosteuereinheit (12) verbunden ist, wobei die Speichereinheit (16) ausgelegt ist, um die Leitungszustände von sämtlichen der Schaltmodule (1) in dem Bereich aufzuzeichnen, wenn das Schaltmodul (1) betrieben wird, um an dem Lernmodus teilzunehmen.

9. Intelligentes Schaltmodul (1) nach einem der vorhergehenden Ansprüche, weiterhin umfassend eine Anzeigeeinheit (17), die elektrisch mit der Mikrosteuereinheit (12) verbunden ist, wobei
der Stromverbrauch des Schaltmoduls (1) von der Leistungserfassungs- und Steuereinheit (13) erfasst wird, um eine Stromstärke-Informationen (C2) zu erzeugen; und
die Anzeigeeinheit (17) die Stromstärke-Informationen (C2) oder die Nutzung von Strom anzeigt, die durch das Schaltmodul (1) entsprechend der Stromstärke-Information (C2) berechnet wird.

10. Betriebsverfahren für den Betrieb von intelligenten Schaltmodulen (1), wobei das Betriebsverfahren bei einer Gruppe angewendet wird, die eine Mehrzahl der Schaltmodule (1) umfasst, welches Betriebsverfahren umfasst:
a) Auswählen eines der Schaltmodule (1) als Haupt-Schaltmodul der Gruppe;
b) Empfangen und Aufzeichnen einer Leitungszustandsinformation (I1) von sämtlichen der Schaltmodule (1) in der Gruppe, wenn das Haupt-Schaltmodul betrieben wird, um an einem Lernmodus teilzunehmen, wobei die Leitungszustandsinformation (I1) die Stromstärke des Stroms umfasst, der durch die Schaltmodule (1) in der Gruppe fließt, wenn diese leitend sind; und
c) Senden eines Schaltbefehls (S1) von dem Haupt-Schaltmodul an die anderen Schaltmodule (1) in der Gruppe in Übereinstimmung mit der Leitungszustandsinformationen (I1), die in dem Haupt-Schaltmodul aufgezeichnet ist, um dadurch die Stromstärke des Stroms zu ändern, der durch die Schaltmodule in der Gruppe fließt, wenn das Haupt-Schaltmodul betrieben wird, um einen Sicherungsmodus zu aktivieren, wobei sämtliche der Schaltmodule (1) in der Gruppe zurück auf den Status geschaltet werden, der in dem Lernmodus aufgezeichnet wurde.

11. Betriebsverfahren nach Anspruch 10, wobei in dem Schritt b) ein Steuerbefehl (C1) von dem Haupt-Schaltmodul an sämtliche der Schaltmodule (1) in der Gruppe gesendet wird, so dass der Leitungszustand durch das Schaltmodul (1) erkannt wird und die Leitungszustandsinformation (I1) von dem Schaltmodul (1) an das Haupt-Schaltmodul gesendet wird.

12. Betriebsverfahren nach Anspruch 10 oder 11, wobei die Schaltmodule (1) über das Digital Addressable Lighting Interface Protokoll zur Adressierung elektrisch miteinander verbunden sind.

13. Betriebsverfahren nach Anspruch 12, wobei der Steuerbefehl (C1), der Schaltbefehl (S1) und die Leitungszustandsinformation (I1) von den Schaltmodulen (1) mit einem ZigBee-Protokoll drahtlos übertragen werden.

14. Betriebsverfahren nach einem der Ansprüche 10 bis 13, weiterhin umfassend:
d) Erfassen des Stromverbrauchs des Schaltmoduls (1), um eine Stromstärke-Information (C2) zu erzeugen; und
e) Anzeigen der Stromstärke-Information (C2) oder der Nutzung von Strom, die von dem Schaltmodul (1) berechnet wird, entsprechend der Stromstärke-Information (C2) auf einer Anzeigeeinheit (17) in dem Schaltmodul (1).

15. Betriebsverfahren nach einem der Ansprüche 10 bis 14, wobei in dem Schritt b) und in dem Schritt c) eine Schalteinheit (11) in dem Haupt-Schaltmodul betrieben wird, so dass das Haupt-Schaltmodul betrieben wird, um an dem Lernmodus teilzunehmen, und betrieben wird, um den Sicherungsmodus anzuschalten.

## Revendications

1. Un module de commutation intelligent (1), configuré pour être électriquement connecté à une ligne de puissance (2) et à une charge (3) et pour transporter une énergie électrique depuis la ligne de puissance (2) vers la charge (3), ledit module de commutation intelligent (1) comprenant :
une unité de commande et de détection de puissance (13) devant être électriquement connectée à la ligne (2), ladite unité de commande et de détection de puissance (13) étant configurée
pour détecter qu'un état de puissance est en conduction ou hors conduction et pour commuter l'état de puissance et ;
pour détecter l'intensité du courant électrique passant au travers du module de commutation (1) et pour changer l'intensité du courant électrique passant au travers du module de commutation (1) ;
une micro unité de commande (12) électriquement connectée à l'unité de commande et de détection de puissance (13) ;
une unité de commutation (11) électriquement connectée à la micro unité de commande (12), l'unité de commutation (11) étant opérée de manière externe pour commander l'unité de commande et de détection de puissance (13) de façon à commuter le statut de puissance ; et
un transmetteur/récepteur de signal (15) électriquement connecté à la micro unité de commande (12), le transmetteur/récepteur de signal (15) étant configuré pour transmettre en externe une information d'état de puissance (11) du module de commutation (1) et de recevoir l'information d'état de puissance (I1) transmise par d'autres modules de commutation (1),
dans lequel l'information d'état de puissance (11) transmise par tous les autres modules de commutation (1), dans une zone, est reçue par les modules de commutation (1) lorsque les modules de commutation (1) sont commandés en externe pour entrer dans un mode d'apprentissage ;
les états de puissance de tous les modules de commutation (1) au sein de la zone sont commandés par le module de commutation (1) en fonction de l'information d'état de puissance (I1) stockée au sein de l'unité de commutation (1) lorsque le module de commutation (1) est opéré en externe pour entrer dans un mode de sauvegarde, et
les états de puissance de tous les modules de commutation (1) au sein de la zone sont commutés à nouveau dans les états qui étaient stockés dans le mode d'apprentissage.

2. Le module de commutation intelligent (1) tel que revendiqué dans la revendication 1, configuré en outre pour enregistrer l'état de puissance qui est soit en conduction ou hors conduction au sein de l'information d'état de puissance (11), dans lequel le courant passant au travers du module de commutation (1) est en outre enregistré au sein de l'information d'état de puissance (11) si l'état de puissance est en conduction.

3. Le module de commutation intelligent (1) tel que revendiqué dans la revendication 1 ou 2, dans lequel l'unité de commutation (11) est un commutateur digital, un commutateur à bouton poussoir, un commutateur rotatif ou coulissant.

4. Le module de commutation intelligent (1) tel que revendiqué dans l'une quelconque des revendications précédentes, dans lequel le module de commutation (1) est électriquement connecté aux autres modules de commutation (1) avec, pour adressage, le protocole d'interface lumineux adressable numérique.

5. Le module de commutation intelligent (1) tel que revendiqué dans la revendication 4, dans lequel :
l'unité de transmission/réception de signal (15) est un transmetteur/récepteur Zigbee ; et
une commande de contrôle (C1), une commande de commutation (S1) et une information d'état de puissance (11) sont transmises via une communication sans fil depuis le module de commutation (1) au travers l'unité de transmission/réception de signal (15) avec un protocole Zibee et suivant le protocole d'interface lumineux adressable numérique.

6. Le module de commutation intelligent (1) tel que revendiqué dans l'une quelconque des revendications précédentes, comprenant en outre un bornier de charge (14) électriquement connecté à l'unité de commande et de détection de puissance (13), ledit module de commutation intelligent (1) étant en outre configuré pour être connecté à la charge (3) via le bornier de charge (14).

7. Le module de commutation intelligent (1) tel que revendiqué dans la revendication 6, dans lequel le bornier de charge (14) est un bornier de puissance ou un borner pour une lampe électrique.

8. Le module de commutation intelligent (1) tel que revendiqué dans l'une quelconque des revendications précédentes, comprenant en outre une unité de mémoire (16) électriquement connectée à la micro unité de commande (12), dans laquelle l'unité de mémoire (16) est configuré pour enregistrer les états de puissance de tous les modules de commutation (1) dans une zone lorsque le module de commutation (1) est entraîné dans une zone d'apprentissage.

9. Le module de commutation intelligent (1) tel que revendiqué dans l'une quelconque des revendications précédentes, comprenant en outre une unité d'affichage (17) électriquement connectée à la micro unité de commande (12), dans lequel
la consommation en courant du module de commutation (1) est détectée par l'unité de commande et de détection de puissance (13) pour générer une information d'ampérage ( C2) ; et
l'unité d'affichage (17) affiche l'information d'ampérage (C2) ou l'utilisation d'électricité calculée par le module de commutation (1) selon l'information d'ampérage (C2).

10. Un procédé de fonctionnement de modules de commutation intelligent (1), le procédé étant appliqué à un groupe comprenant une pluralité de modules de commutation (1), le procédé de fonctionnement comprenant :
a) la sélection d'un module de commutation (1) en qualité de module de commutation principal au sein du groupe ;
b) la réception et l'enregistrement d'une information d'état de puissance (11) de tous les modules de commutation (1) au sein du groupe lorsque le module de commutation principal est plongé dans un mode d'apprentissage, ladite information d'état de puissance (11) comprenant l'intensité du courant passant au travers les modules de commutation (1) au sein du group lorsque en conduction ; et
c) la transmission, aux autres modules de commutation (1) au sein du groupe, d'une commande de commutation (S1) depuis le module de commutation principal, suivant l'information d'état de puissance (11) enregistrée dans le module de commutation principal pour changer l'intensité du courant passant au travers des modules de commutation au sein du groupe, dans lequel le module de commutation principal est mis en oeuvre pour fonctionner en mode de sauvegarde, dans lequel tous les modules de commutation (1) au sein du groupe retournent à leur statut enregistré dans le mode d'apprentissage.

11. Le procédé de fonctionnement tel que revendiqué dans la revendication 10, dans lequel dans l'étape b), une commande de contrôle (C1) est transmise depuis le module de commutation principal (1) vers tous les modules de commutation (1) du groupe, de telle manière que l'état de puissance est détectée par le module de commutation (1) et l'information d'état de puissance (11) est transmise depuis le module de commutation (1) vers le module de commutation principal.

12. Le procédé de fonctionnement tel que revendiqué dans la revendication 10 ou 11, dans lequel les modules de commutation (1) sont électriquement connectés les uns aux autres avec le protocole d'interface lumineux numérique pour adressage.

13. Le procédé de fonctionnement tel que revendiqué dans la revendication 12, dans lequel la commande de contrôle (S1) et l'information d'état de puissance (11) sont transmises sans fil depuis les modules de commutation (1) avec le protocole Zigbee.

14. Le procédé de fonctionnement tel que revendiquée dans l'une quelconque des revendications 10 à 13, comprenant en outre :
d) la détection de la consommation de courant du module de commutation (1) pour générer une information d'ampérage (C2) ; et
e) l'affichage de l'information d'ampérage (C2) ou de l'utilisation d'électricité calculée par le module de commutation (1) suivant l'information d'ampérage (C2) sur une unité d'affichage (17) au sein du module de communication (1).

15. Le procédé de fonctionnement tel que revendiqué dans l'une quelconque des revendications 10 à 14, dans lequel au sein de l'étape b) et c), une unité de commutation (11) est mis en oeuvre au sein du module de commutation principal, de telle manière que le module de commutation principal est entraîné pour entrer dans un mode d'apprentissage et est mis en fonctionnement pour la mise en oeuvre du mode de sauvegarde.
